(19) Europäisches Patentamt
European Patent Office
Office européen des brevets

(11) **EP 3 885 570 A1**

## (12) EUROPEAN PATENT APPLICATION

(43) Date of publication:
**29.09.2021 Bulletin 2021/39**

(51) Int Cl.:
**F03B 13/26** [(2006.01)]    **B63B 21/50** [(2006.01)]
**F03D 9/32** [(2016.01)]    **F03D 13/25** [(2016.01)]

(21) Application number: **20164819.3**

(22) Date of filing: **23.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Gamesa Renewable Energy A/S**
**7330 Brande (DK)**

(72) Inventors:
• **Esbensen, Thomas**
  **7400 Herning (DK)**
• **Gebraad, Pieter M. O.**
  **2720 København (DK)**

(74) Representative: **Aspacher, Karl-Georg**
**Siemens Gamesa Renewable Energy GmbH & Co. KG**
**Otto-Hahn-Ring 6**
**81739 München (DE)**

(54) **USING TIDAL CURRENTS FOR OPTIMIZING PRODUCTION IN A FLOATING WIND TURBINE**

(57)    The present invention describes a floating wind turbine (10) comprising:
- a tower (2) extending axially along a longitudinal axis (Z) of the floating wind turbine (10),
- a nacelle (3) and a rotor (5) attached to an upper end of the tower (2),
- a floating foundation (8) attached to a bottom end of the tower (2).
- at least a first mooring line (21) and a second mooring line (22) connecting the floating foundation (8) to a fixed structure,
- a controller (20) configured for controlling the length of the first mooring line (21) and the second mooring line (22) in such a way that:
- if a wind direction (W2) is against the water current direction (W1) and the wind speed (Vw) is below a rated value (Vr), then the first mooring line (21) is extended and the second mooring line (22) is retracted.

## Description

Field of invention

The present invention relates to the field of production in a floating wind turbine.

Art Background

Tides create currents in the oceans near the shore and in bays and estuaries along the coast. These currents are called "tidal currents". Tidal currents change in a regular pattern and can be predicted for future dates. Tidal currents can move in an opposite direction to the wind, in which case the waves move with the wind while the tide moves in the opposite direction, but at larger depth.

It would be therefore desirable to provide the possibility to gain more electricity production from floating wind turbines by making use of tidal currents.

Summary of the Invention

This need is met by the subject matter according to the independent claims. Advantageous embodiments of the present invention are described by the dependent claims.

According to a first aspect of the present invention a floating wind turbine installation is provided. The floating wind turbine installation comprises:

- a tower extending axially along a longitudinal axis of the floating wind turbine,
- a nacelle and a rotor attached to an upper end of the tower,
- a floating foundation attached to a bottom end of the tower,
- at least a first mooring line and a second mooring line connecting the floating foundation to a fixed structure, the first mooring line being upstream the floating wind turbine with respect to a water current direction, the second mooring line being downstream the floating wind turbine with respect to said water current direction, the length of the first mooring line and the second mooring line being variable, the first mooring line and the second mooring line being arrangeable at respective first and second middle lengths for holding the floating foundation in a predefined middle position,
- a controller configured for controlling the length of the first mooring line and the second mooring line in such a way that:
- if a wind direction is against the water current direction and the wind speed is below a rated value, then the first mooring line is extended with respect to the first middle length and the second mooring line is retracted with respect to the second middle length.

According to a second aspect of the present invention a method of operating the above described floating wind turbine installation is provided. The method comprises the steps of:

- if the wind direction is against the water current direction and the wind speed is below a rated value, then extending the first mooring line with respect to the first middle length and retracting the second mooring line with respect to the second middle length.

Advantageously, this invention permits to optimize the wind turbine power production by optimizing the flow around the single floating wind turbine, making use of tidal forces. The proposed invention permits to gain additional energy by moving the floating wind turbine forwards (i.e. towards the wind) below a rated value of the wind speed to gain the added benefit from the drift movement. The floating wind turbine is moved backwards (i. e. in the direction of the wind) above rated wind speed, where a decrease in apparent wind speed does not affect the output of power of the turbine.

With the expression "fixed structure" it is meant a structure which is fixed with respect to the wind and water current, for example a structure which is fixed to the seabed.

With the expression "predefined middle position" it is meant a position of the floating wind turbine which is intermediate between a first extreme position, where the first mooring line is completely extended and the second mooring line is completely retracted, and a second extreme position, where the first mooring line is completely retracted and the second mooring line is completely extended. The "predefined middle position" may be identified as a neutral position where the first and the second mooring lines just allows the floating wind turbine not to be drifted away from its ideal position, following the water current and/or the wind.

According to embodiments of the present invention, the controller is further configured in such a way that:

- if the wind speed is not below a rated value and the water current is below a predefined current threshold then the first mooring line and the second mooring line are set at the first and second middle lengths.

According to embodiments of the present invention, the floating foundation comprises an adaptive drag element to help the drift motion, when the conditions are favourable. In such case the controller is further configured for:

- if the wind direction is against the water current direction and the wind speed is below a rated value, then the drag of the active drag element on the floating foundation is maximised.

According to embodiments of the present invention, the floating wind turbine installation comprises at least one sensor for measuring the wind intensity and/or the wind direction, said at least one sensor being connected to the controller. Alternatively, the wind intensity may be estimated by knowing the power produced by the wind turbine.

According to embodiments of the present invention, the floating wind turbine installation comprises at least one sensor for measuring the water current direction. Alternatively, the water current direction may be estimated, based on previous historical measurements.

It has to be noted that embodiments of the invention have been described with reference to different subject-matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject-matter also any combination between features relating to different subject-matters, in particular between features of the apparatus type claims and features of the method type claims is considered as to be disclosed with this application.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

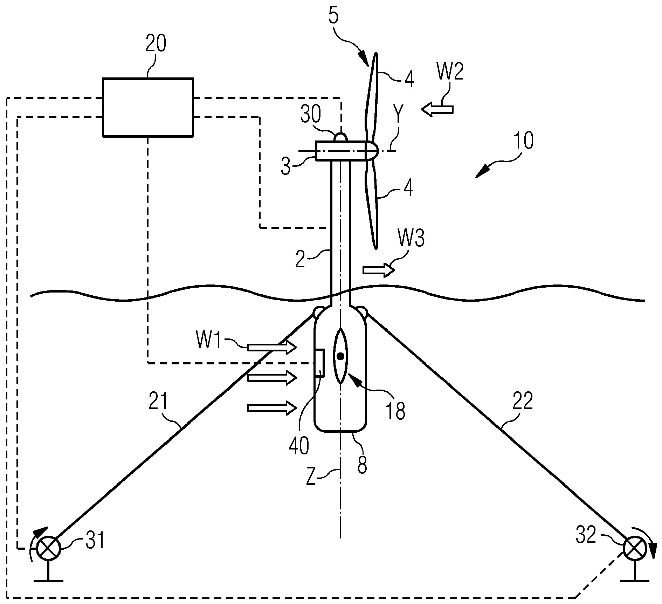

Figure 1 shows a schematic view of a floating wind turbine according to the present invention, in a neutral operating condition.

Detailed Description

The illustrations in the drawings are schematically. It is noted that in different figures, similar or identical elements are provided with the same reference signs.

**Figure 1** shows a floating wind turbine 10 installation according to the invention in a first operative condition. The wind turbine 10 comprises a tower 2, extending axially along a longitudinal axis Z of the floating wind turbine 10. A nacelle 3 is attached to an upper end of the tower 2. The wind turbine 1 further comprises a wind turbine rotor 5 having three blades 4 (in the perspective of Figure 1 only two blades 4 are visible). The rotor 5 is attached to the nacelle 3 in order to be rotatable around a rotational axis Y. The rotational axis Y is horizontally oriented. The invention may also apply to vertical axis wind turbines. The floating wind turbine 10 further comprises a floating foundation 8 attached to a bottom end of the tower 2, axially opposed to the nacelle 3 along the longitudinal axis Z. In operation, the floating foundation 8 is subject to be at least partially immersed in water. The floating foundation 8 comprises a drag element for controlling drag of the floating wind turbine 10. According to other embodiments of the present invention, the drag element 18 may not be present.

The floating wind turbine 10 installation further comprises a first mooring line 21 and a second mooring line 22 connecting the floating foundation 8 to a fixed structure, e.g. a fixed structure provided on the seabed. The first mooring line 21 is upstream with respect to a water current direction W1, the second mooring line 22 is downstream with respect to said water current direction W1. The water current direction W1 may consist of the direction of a tidal current. The length of the first mooring line 21 and the second mooring line 22 are variable. On the seabed two respective winches 31, 32 may be provide for regulating the length of the first mooring line 21 and the second mooring line 22. The first mooring line 21 and the second mooring line 22 being arrangeable at respective first and second middle lengths for holding the floating foundation 8 in a predefined middle position. The middle position is a neutral position where the first and the second mooring lines just allows the floating wind turbine not to be drifted away from its ideal position, following the water current and/or the wind.

The floating wind turbine 10 installation further comprises a controller 20 (schematically represented in figure 1) configured for controlling the length of the first mooring line 21 and the second mooring line 22. According to other embodiments of the invention, more than two mooring line may be provided. To operate the length of the first mooring line 21 and the second mooring line 22 the controller 20 may be connected to the two respective winches 31, 32. The controller 20 controls the length of the first mooring line 21 and the second mooring line 22, in such a way that, if a wind direction W2 on the rotor 5 is against the water current direction W1 and the wind speed Vw is below a rated value Vr, then the first mooring line 21 is extended with respect to the first middle length and the second mooring line 22 is retracted with respect to the second middle length. The wind direction W2 which is oriented against the water current direction W1 (i.e. an angle of 180° is comprised between the direction W1, W2) may be a component of the vector representing the wind direction at the wind turbine 10. By controlling the length of the first mooring line 21 and the second mooring line 22, the controller 20 imposes a drift movement W3 on the floating wind turbine 10 which determines the following value of the power production P:

$$P = 0,5 \; \rho \cdot A \cdot Cp \cdot V^3,$$

Where p is the air density, A is the area swept by the rotor 5, Cp is a coefficient of performance and V = Vw + Vd is the sum of the wind speed Vw and the drift speed Vd, i.e. the speed of the floating wind turbine 10 in the direction of the drift movement W3.

The controller 20 is further configured for, if the wind speed Vw is not below the rated value Vr and the water current W1 is below a predefined current threshold then the first mooring line 21 and the second mooring line 22 are set at the first and second middle lengths. This means that if the first mooring line 21 and the second mooring line 22 are already at the first and second middle lengths they are kept at that length, otherwise they are moved to the first and second middle lengths and kept at that length.

If the floating foundation 8 comprises the active drag element 18, the controller 20 is further configured for, if a wind direction W2 is against the water current direction W1 and the wind speed Vw is below a rated value Vr, then the drag of the active drag element on the floating foundation 8 is maximised.

The wind turbine 10 installation further comprises one or more wind sensor 30 for measuring the wind speed intensity Vw and/or the wind direction W2. The wind sensor 30 is connected to the controller 20. The wind sensor 30 may be provided on the nacelle 3 or on any other convenient position on the wind turbine 10. According to other embodiments of the invention, the wind intensity may be estimated by knowing the power produced by the wind turbine (for example by inventing the expression $P = 0,5 \, p \cdot A \cdot Cp \cdot V^3$).

The wind turbine 10 installation further comprises one or more current sensor 40 for measuring the water current direction W1. The current sensor 40 is connected to the controller 20. The current sensor 40 may be provided on the floating foundation 8 or on any other convenient position on the wind turbine 10. According to other embodiments of the invention, the current sensor 40 is not present and the water current direction W1 is estimated, based on previous historical measurements and/or mathematical models.

**Claims**

1. Floating wind turbine (10) installation comprising:

   - a tower (2) extending axially along a longitudinal axis (Z) of the floating wind turbine (10),
   - a nacelle (3) and a rotor (5) attached to an upper end of the tower (2),
   - a floating foundation (8) attached to a bottom end of the tower (2),
   - at least a first mooring line (21) and a second mooring line (22) connecting the floating foundation (8) to a fixed structure, the first mooring line (21) being upstream the floating wind turbine (10) with respect to a water current direction (W1), the second mooring line (22) being downstream the floating wind turbine (10) with respect to said water current direction (W1), the length of the first mooring line (21) and the second mooring line (22) being variable, the first mooring line (21) and the second mooring line (22) being arrangeable at respective first and second middle lengths for holding the floating foundation (8) in a predefined middle position,
   - a controller (20) configured for controlling the length of the first mooring line (21) and the second mooring line (22) in such a way that:

      - if a wind direction (W2) against the water current direction (W1) and the wind speed (Vw) is below a rated value (Vr), then the first mooring line (21) is extended with respect to the first middle length and the second mooring line (22) is retracted with respect to the second middle length.

2. Floating wind turbine (10) installation according to claim 1, wherein the controller (20) configured for:

      - if the wind speed (Vw) is not below a rated value (Vr) and the water current (W1) is below a predefined current threshold then the first mooring line (21) and the second mooring line (22) are set at the first and second middle lengths.

3. Floating wind turbine (10) installation according to claim 1 or 2, wherein the floating foundation (8) comprises an active drag element (18), the controller (20) being further configured for:

      - if the wind direction (W2) is against the water current direction (W1) and the wind speed (Vw) is below a rated value (Vr), then the drag of the active drag element on the floating foundation (8) is maximised.

4. Floating wind turbine (10) installation according to claim 1 or 2 or 3, further comprising at least one sensor (30) for measuring the wind intensity and/or the wind direction, said at least one sensor being connected to the controller.

5. Floating wind turbine (10) installation according to any of the previous claims, further comprising at least one sensor (40) for measuring the water current direction.

6. Method of operating a floating wind turbine (10) installation comprising:

      - a tower (2) extending axially along a longitudinal axis (Z) of the floating wind turbine (10),
      - a nacelle (3) and a rotor (5) attached to an upper end of the tower (2),
      - a floating foundation (8) attached to a bottom end of the tower (2),
- at least a first mooring line (21) and a second mooring line (22) connecting the floating foundation (8) to a fixed structure, the first mooring line (21) being upstream the floating wind turbine (10) with respect to a water current direction (W1), the second mooring line (22) being downstream the floating wind turbine (10) with respect to said water current direction (W1), the length of the first mooring line (21) and the second mooring line (22) being variable, the first mooring line (21) and the second mooring line (22) being arrangeable at respective first and second middle lengths for holding the floating foundation (8) in a predefined middle position, the method comprising the step of:

- if a wind direction (W2) is against the water current direction (W1) and the wind speed (Vw) is below a rated value (Vr), then extending the first mooring line (21) with respect to the first middle length and retracting the second mooring line (22) with respect to the second middle length,

7. Method according to claim 6, wherein the method comprises the further step of:

- if the wind speed (Vw) is not below a rated value (Vr) and the water current is below a predefined current threshold then setting the first mooring line (21) and the second mooring line (22) at the first and second middle lengths.

8. Method according to claim 6 or 7, wherein the water current direction is measured.

9. Method according to claim 6 or 7, wherein the water current direction is estimated.

10. Method according to any of the claims 6 to 9, wherein the wind intensity and/or the wind direction is measured.

11. Method according to any of the claims 6 to 9, wherein the wind intensity is estimated.

Europäisches
Patentamt

European
Patent Office

Office européen
des brevets

# EUROPEAN SEARCH REPORT

Application Number

EP 20 16 4819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 267 297 A2 (FUJI HEAVY IND LTD [JP]) 29 December 2010 (2010-12-29) * paragraphs [0018] - [0026], [0051], [0052] * * figures 1,2,4 * | 1-11 | INV. F03B13/26 B63B21/50 F03D9/32 F03D13/25 |
| A | WO 2013/065323 A1 (NAT MARITIME RES INST [JP]) 10 May 2013 (2013-05-10) * paragraph [0048] * * figures 1,2 * | 1-11 | |
| A | JP 2016 217151 A (HITACHI LTD) 22 December 2016 (2016-12-22) * abstract; figures 1,2,5,6 * | 1-11 | |
| A | EP 3 388 664 A1 (XEMC DARWIND BV [NL]) 17 October 2018 (2018-10-17) * paragraphs [0028], [0033] * * figures 10-12 * | 1-11 | |

TECHNICAL FIELDS
SEARCHED      (IPC)

F03B
B63J
B63B
F03D
B63H

The present search report has been drawn up for all claims

| Place of search | Date of completion of the search | Examiner |
|---|---|---|
| Munich | 27 July 2020 | Lux, Ralph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 885 570 A1**

## ANNEX TO THE EUROPEAN SEARCH REPORT
## ON EUROPEAN PATENT APPLICATION NO.

EP 20 16 4819

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2020

| Patent document cited in search report | | Publication date | Patent family member(s) | | Publication date |
|---|---|---|---|---|---|
| EP 2267297 | A2 | 29-12-2010 | EP 2267297 A2 | | 29-12-2010 |
| | | | JP 5410172 B2 | | 05-02-2014 |
| | | | JP 2011007085 A | | 13-01-2011 |
| WO 2013065323 | A1 | 10-05-2013 | JP 6187935 B2 | | 30-08-2017 |
| | | | JP WO2013065323 A1 | | 02-04-2015 |
| | | | WO 2013065323 A1 | | 10-05-2013 |
| JP 2016217151 | A | 22-12-2016 | NONE | | |
| EP 3388664 | A1 | 17-10-2018 | NONE | | |

EPO FORM P0459

For more details about this annex : see Official Journal of the European Patent Office, No. 12/82

8